# EUROPEAN PATENT SPECIFICATION

(11) **EP 0 957 680 B1**
(45) Date of publication and mention of the grant of the patent: **19.09.2001**
(21) Application number: 96937405.7
(22) Date of filing: 28.10.1996
(51) Int. Cl.: A01K 1/015, B01J 2/12, F26B 3/08, F26B 17/08

(54) **METHOD AND APPARATUS FOR PRODUCING PAPER PELLETS**
VERFAHREN UND VORRICHTUNG ZUR HERSTELLUNG VON PAPIERGRANULATEN
PROCEDE ET MACHINE PERMETTANT DE PRODUIRE DES BOULETTES DE PAPIER

(30) Priority: 26.10.1995 GB 9521913; 14.12.1995 GB 9525549
(43) Date of publication of application: 24.11.1999
(73) Proprietor: Smith, Raymond, Bielby, York, North Yorkshire Y04 4JW (GB)
(72) Inventor: SMITH, Raymond, North Yorkshire, YO4 4JW (GB); BRAMALL, Howard, Adrian, Nr Huddersfield, West Yorkshire HD8 0QW (GB); WHETTINGSTEEL, Stephen, Southampton SO13 5PX (GB)
(74) Representative: Pidgeon, Robert John
(86) International application number: GB9602620
(87) International publication number: WO9715184

(56) References cited:
- GB-A- 2 029 758
- GB-A- 2 157 722
- SU-A- 994 738
- US-A- 3 941 536
- DATABASE WPI Section Ch, Week 9033 Derwent Publications Ltd., London, GB; Class D22, AN 90-252020 XP002027316 & JP 02 177 833 A (IDE SHIGYO KK) , 10 July 1990
- PATENT ABSTRACTS OF JAPAN vol. 95, no. 003 & JP 07 063478 A (UBE IND LTD), 10 March 1995,
- PATENT ABSTRACTS OF JAPAN vol. 018, no. 316 (C-1213), 16 June 1994 & JP 06 070680 A (KAWASAKI KIKO CO LTD), 15 March 1994,

## Description

This invention relates to a method and apparatus for producing pellets of paper or the like material, particularly but not exclusively of recycled paper.

Such pellets can be used, inter alia, as pet litter, in which case a deodoriser or deodorisers may be incorporated; as insulating material for loft spaces and wall cavities of buildings, in which case a flame retardant or retardants may be incorporated; and as material for absorbing spillages of oil, chemicals and the like.

US 3,941,536 discloses a method for producing paper pellets using a drum including a series of interchangeable liners having a specific cone frustum baffle configuration. GB 2 157 722 discloses a method for making cellulosic particles which includes the step of drying the particles at an elevated temperature.

The object of the present invention is to provide an improved method for producing such pellets.

According to a first aspect of the invention there is provided a method of producing paper pellets as claimed in Claim 1. The method comprises forming paper pulp into pellets, preferably includes the step of drying the pellets by agitating them in a flow of air.

Preferably the method is for the production of absorbent paper pellets. Absorbency is a desirable property for pellets used, for example, as pet litter. However the method may be adjusted for the production of paper pellets which are not absorbent or have low absorbency. Such pellets may be used, for example, as insulating materials.

The flow of air is suitably at a temperature and for a time appropriate to achieve the desired degree of absorbency of the pellets. In most cases the flow of air is at a temperature and for a time insufficient to "bake" the pellets to a state of low absorbency.

The pulp is preferably formed into pellets by treating it to form a fibre crumb and then tumbling the crumb in a drum or rotary pelletizer. The drum may have a somewhat concave internal profile in axial cross-section and may be rotatable about an axis which may be slightly downwardly-inclined from its inlet end to its outlet end. Preferably the drum or rotary pelletizer is as hereinbelow described.

Generally the flow of air is at an elevated temperature, for example in the range 35-150°C, preferably 70-140°C. However air at ambient temperature could be used provided a sufficiently long time was allowed for drying.

Preferably, the pellets are dried by being exposed to high temperature air at a high flow rate for a predetermined time and then exposed to lower temperature air at a lower flow rate for a predetermined time, the flow rates being such as to agitate the pellets sufficiently but not excessively having regard to the significant reduction in their weight as they dry.

Preferably, also, the high temperature does not exceed 150°C. It may be in the range 90 - 150°, preferably 100-140°C, more preferably 120-130°C.

Preferably, also, the lower temperature is in the range 35-90°C, more preferably 60-90°C.

Preferably, the pellets are dried in a double flow conveyor drier.

Preferably, also, the pulp is made from recycled paper.

According to the method of the invention the paper pulp or fibre crumb is introduced into a rotary pelletizer in the form of a drum or barrel into which paper pulp or fibre crumb. The internal surface of the drum or barrel comprises a plurality, typically three or four, generally conical portions, tapering in the downstream direction.

Upstream of the or each such generally conical portion, there is an opposing conical portion, hereinafter called a shoulder. Preferably the generally conical portion(s) and the shoulder(s) have a different gradient. Thus, the diameter of the internal surface of the drum, or of a section thereof, may increase longitudinally from a given diameter to a maximum diameter in the region of a shoulder and taper from the maximum diameter to a given diameter, in the region of the said generally conical portion. The gradient of the increase is preferably larger than that of the taper. For example, it may be approximately double.

Preferably the drum comprises a plurality or series, typically three or four, of interconnecting units. Preferably each unit comprises a said generally conical portion. Typically, each unit comprises an outer shell, preferably circularly cylindrical, and an inner shaped surface formed with a generally conical portion. Thus the generally conical portions of the drum may be detachable from each other. The drum or barrel is adapted to rotate about its longitudinal axis. Preferably the apparatus comprises means to facilitate altering of the inclination of the longitudinal axis relative to the horizontal. Such means may comprise one or more hydraulic rams or other mechanical means. In use, the longitudinal axis is suitably in the range 0.5 to 20°, preferably 0.5 to 6.5°, to the horizontal, inclined downwardly in the downstream direction.

It should be noted that term "generally conical" as used herein denote shapes which have conical surfaces which are the locus of a straight line, as well as shapes which are similar but have a degree of curvature, preferably concave but possibly convex, whilst nevertheless tapering. In the latter cases the term "angle of taper" as used herein denotes the angle to the longitudinal axis of the drum or barrel, of a line drawn from the start to the finish of the conical portion.

Preferably the angle of taper of the or each said generally conical portion is in the range 5 to 40°, preferably 10 to 30°, most preferably 15 to 25°.

Suitably the angle of taper of the or each said generally conical portion exceeds the angle of downward inclination of the longitudinal axis relative to the horizontal.

Preferably means are provided to facilitate the introduction of chemical or other additives into the drum or barrel. This causes the pellets to be impregnated with the additive. Preferably the apparatus is adapted to allow the size, shape, diameter, density and/or moisture absorbency levels of the pellets to be adjusted or selected as desired. The efficiency of the pellet to absorb moisture will depend upon the density of the paper and the size and shape of the pellet. Thus, the geometrical arrangement and slope or taper of the conical sections, the rate of rotation of the drum, the angle of inclination of the drum may be selected or adjusted as required, to give the desired pellet characteristics. Removable conical sections and/or interconnecting units allow the sections and/or units to be interchanged or selected according to the results required to be achieved. In particular, the size of pellets produced can be adjusted by varying the geometry of the pelletizer. The surface finish of the pellets may be determined by the length of time the pellet remains within the drum, for example longer times generally give a smoother surface finish.

In use, the pelletizer drum is rotated and the paper is tumbled as it moves from the point of entry to the point of exit, which is typically at the lower end of the drum. Typically, the apparatus causes the paper to form into substantially round pellets. The rate of rotation, angle of inclination of the drum and configuration of the conical sections combine to roll the pellets into balls of even size and density.

The invention will now be described, by way of example only, with reference to the accompanying drawings in which:-
Figure 1 is a flow chart for the production of absorbent pellets of recycled paper;
Figure 2 is a longitudinal cross-section through a first embodiment of pelletizer drum;
Figure 3 is a longitudinal cross-section through two of the units of a second embodiment of drum; and
Figure 4 is a longitudinal cross-section through a third embodiment of pelletizer drum.

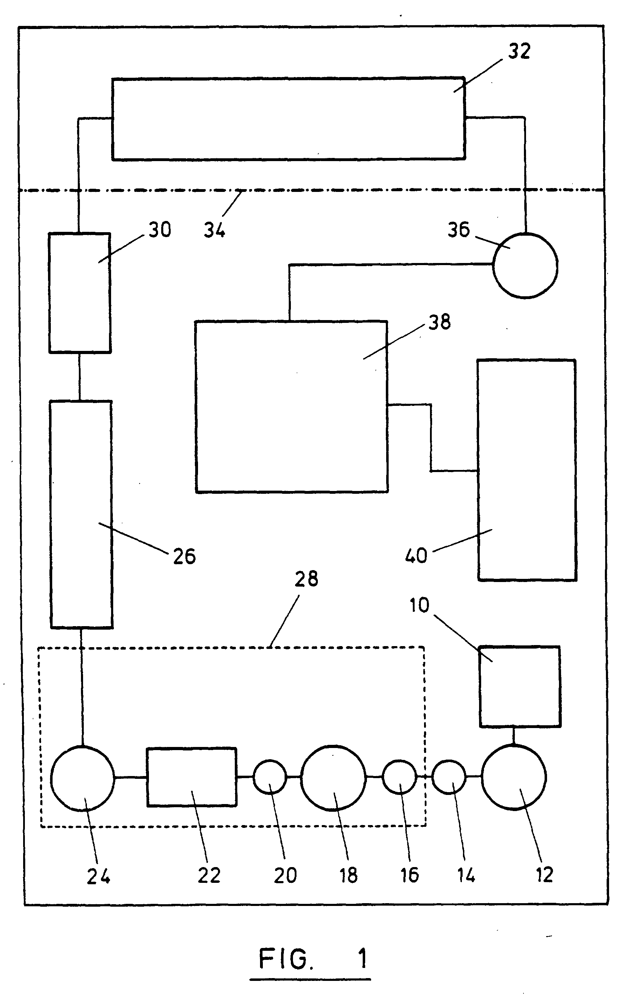

Referring now to Figure 1 of the drawings, raw material consisting of waste paper such as old newspapers, periodicals and magazines is stored in an area 10 and transferred as required, after the removal of binding, into a dry paper hopper 12. From said hopper the paper is fed either manually or by a conveyor to a shredder 14 which shreds it into pieces about 15-60 mm, preferably 40 mm, across. It is then delivered by a conveyor 16 to a conventional paper pulper 18 capable of producing, say, 1.5 - 5 tonnes of pulp per hour. In the pulper 18, the shredded paper is mixed with water to a consistency, that is to say the proportion by weight of paper present, in the range 2 to 20 per cent, and preferably 4 to 12 per cent. The water may contain an additive or additives, for example an inert whitener or colorant; and/or an agent to promote breakdown of the paper. From the pulper 18, the pulp is transferred by a slurry pump 20 to a hydro-extractor 22 in the form of a screw auger or belt press, where it is de-watered into a fibre crumb having a consistency in the range 20 to 70 per cent, and preferably 35 to 65 per cent. The fibre crumb is fed continuously by a screw conveyor 24 to a pelletizer 26 which comprises a generally cylindrical elongated drum, the ratio of the axial length to the diameter of said drum being in the range 1:1 to 15:1, and more preferably 2:1 to 8:1. The preferred drum is about 3 metres in length and about 1 metre in diameter. Said drum is rotatable about an axis which is slightly downwardly inclined from its inlet end to cause the crumb/pellets to be moved slowly towards its outlet end by gravity as well as being pushed theretowards by the incoming crumb, the angle of inclination being between, say, 0.5 and 6.5 degrees to control the time taken for the crumb/pellets to pass through the drum and thus to control the size of the pellets produced by the tumbling action which takes place within the rotating drum. To help retain a workable mass of crumb/pellets tumbling within the drum, it has a somewhat concave internal peripheral profile in axial cross-section. This is achieved by providing an inwardly projecting annular cusp at each end. The drum rotates slowly such that its peripheral speed is in the range 6 to 200 metres per minute. Preferably it rotates at about 60 revolutions per minute whereby its peripheral speed with a diameter of about 1 metre is about 180 to 190 metres per minute. The desirable residence time for retaining the crumb/pellets within the drum is in the range 3 to 40 minutes, and preferably 3 to 15 minutes. The capacity of the drum is in the range 1 to 10 cubic metres, and preferably 5 to 8 cubic metres. Such a drum contains about 100 to 1000 kilogrammes of the crumb/pellets during pelletization, and pellet formation occurs at a rate of, say, 0.5 to 10 tonnes per hour.

If wished warm moist air from the later drying stage may be fed into the drum, to warm the pellets and reduce the energy requirement of the drying stage.

Crumb formation takes place at ambient temperature using cold water, in a proprietary pulping system contained within the dotted line 28; and pelletization likewise may take place at ambient temperature, although warm water condensed from the warm moist air of the later drying stage may be added.

The discrete regular pellets which are discharged from the drum are graded by means of conventional grading equipment 30 employing vibrating screens, pellets which are too large or too small for their intended use being re-cycled, for instance by re-pulping them. The graded pellets are then dried by any apparatus capable of agitating them in a flow of air at a temperature and for a time insufficient to bake them to a state of low absorbency. Examples of such apparatus are, inter alia, a fluidised bed drier, a vibrating fluid bed drier, a rotating louvred drum drier, and a continuous flow louvred bed drier. The preferred drying apparatus is a continuous flow louvred bed drier 32 of double flow conveyor type. This comprises an upper gently-inclined chain conveyor with loosely-overlapping slats onto the higher end of which the wet pellets are continuously delivered. The pellets are transported slowly down to the lower end of the upper conveyor whilst air at a temperature not exceeding 150°C, and generally 120-130°C, is blown up through the slats and thus through the pellets at a higher flow rate, the slats being fluttered by the flow of air so as to keep the relatively heavy wet pellets in a state of constant agitation. The drier 32 also comprises a lower chain conveyor with loosely-overlapping slats which is disposed beneath the upper conveyor and is gently-inclined in the opposite direction. The pellets fall from the lower end of the upper conveyor onto the higher end of the lower conveyor, being completely turned and mixed as they fall, and are transported slowly down to the lower end of the lower conveyor whilst substantially cooler air, generally at a temperature of 75-80°C, is blown up through the slats and thus through the pellets at a lower flow rate, the slats again being fluttered by the flow of air so as to keep the now lighter drier pellets in a state of constant but not excessive agitation. In the drawing, the drying area is to the right of the broken line 34. The pellets discharged from the lower end of the lower conveyor of the drier 32, which can have a very low residual water content, for example about 5 per cent by weight, are transferred to a bagging hopper 36, from which the bagged pellets are taken to a palletising and storage area 38 whence they are moved as required by a fork-lift truck to a loading area 40 for distribution by wagons. The pellets pass through a magnetic screening station (not shown) to remove ferrous objects either before or after the pellets pass through the drier 32.

The aim in many processes in accordance with the invention is to produce pellets or beads having a generally smooth surface with no or few fibrous extensions outside the mean dimensions of the pellets or beads.

Various modifications are possible within the scope of this invention. In one modification, a commercially available granulator is provided between the screw conveyor 24 and the pelletizer 26, whereby the fibre crumb is formed into granules about 1 to 20 millimetres diameter, this being more necessary for the production of smaller pellets. In a further modification, the pellets discharged from the drier 32 are stored in bulk in a silo with a forced ambient air flow, which further completes drying of the pellets, maintains them in good condition, and enables them to be bagged into differently-marked bags as and when required by different customers. In yet another modification, aimed at conserving energy, the pellets are dried by agitating them while being exposed to a high temperature for a short time, exposed to a lower temperature for a longer time, and again exposed to a high temperature for a short time, the high temperature not exceeding 150°C and the lower temperature being the ambient temperature, while each short time is of the order of 5 minutes and the longer time is of the order of 20 to 60 minutes. In yet a further modification, the pellets are dried simply by agitating them while being exposed to a temperature not exceeding 150°C for a time not exceeding 20 minutes.

In another example, the paper recycling system comprises a shredder which processes loose baled paper into pre-determined size particles which discharge onto a conveyor for feeding to a storage hopper. Dry paper is removed from the storage hopper via a screw conveyor. Paper which is being transported by the screw conveyor is subjected to a high velocity water spray system which ensures an even coverage of water is achieved to all paper. Moist paper from the conveyor is discharged into a pulper which mixes water and chemical at a pre-determined rate. At this point foreign objects are removed and retained in the junk box. Paper is processed in the pulper until it has a specific moisture content of 95% at which time it is pumped through a stainless steel piping system to the hydro-extractor for dewatering. 55% of the moisture content is removed from the paper during the dewatering process. Removed water is pumped back for re-use at the pulper. Moist paper in granule form is discharged from the hydro-extractor into the hopper of a further screw conveyor where it is supplied to the neck of the pelletizer. The pelletizer forms the paper into pellets using a unique process combining one or more of inclination drums, conical formation of drums, texture of drum surface and speed of rotation. Damp pre-formed pellets are transported from the pelletizer discharge via a belt conveyor to material grading screens. These screens remove all under and over-sized particles. Removed particles are returned manually to the pulper for reprocessing. Pre-sized paper pellets are discharged from the grading screen to a belt conveyor. Conveyed pellets are discharged into the top of a dryer. Continuous drying ensures the product is 95% dry at the point of discharge from the dryer. A take-off conveyor removes the pellets from the dry end of the dryer and deposits it into the storage hopper for onward processing.

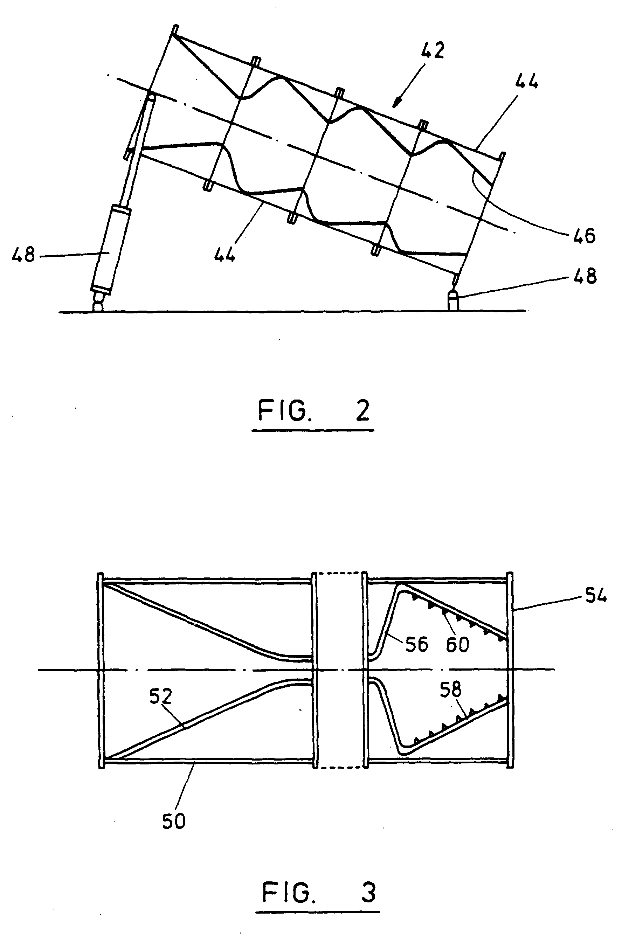

Referring to Figure 2, the pelletizing drum 42 comprises a series of four interconnected units 44. Each unit is fitted with an inner shell 46 having a conical portion, tapering in the downstream direction at an angle of taper (as defined hereinabove) of about 18°. The first unit has only the conical portion. The other units each have an opposed conical portion or shoulder, and the shoulder of the second unit is larger than that of the third unit, which is larger than that of the fourth unit. The tapering conical portions of all four units are, however, substantially identical. The length of each unit 44 and the degree of taper of the conical portions 46 together with the speed of rotation of the drum 42 and the consistency and moisture content of the paper or other materials entering the drum combine to form pellets which have unique properties in terms of their diameter, roundness, density, absorbency and surface finish. Hydraulic or pneumatic rams 48 located at each end of the drum 42 allow variation of the angle of inclination and typically are designed to allow maximum lift of the drum to enable a full cleaning process to be undertaken at the end of the processing period. Typically the angle varies between 0.5 and 6.5° and the drum may be inclined more steeply, for example as shown in Figure 2, to aid cleaning.

Referring to Figure 3, two of the interconnectable units of an alternative drum are illustrated. Unit 50 comprises an inner conical feed-in shell 52 having a single tapering configuration and unit 54 has a double conical inner shell configuration comprising a shoulder of increasing diameter 56 and a section of reducing diameter 58, the latter having an angle of taper of about 33°. It will be appreciated that, as shown in Figure 3, the inlet and outlet ends of the drum or units may have different effective internal diameters. The inner surface of part of the conical sections may be provided with teeth or protrusions 60 as shown in Figure 3.

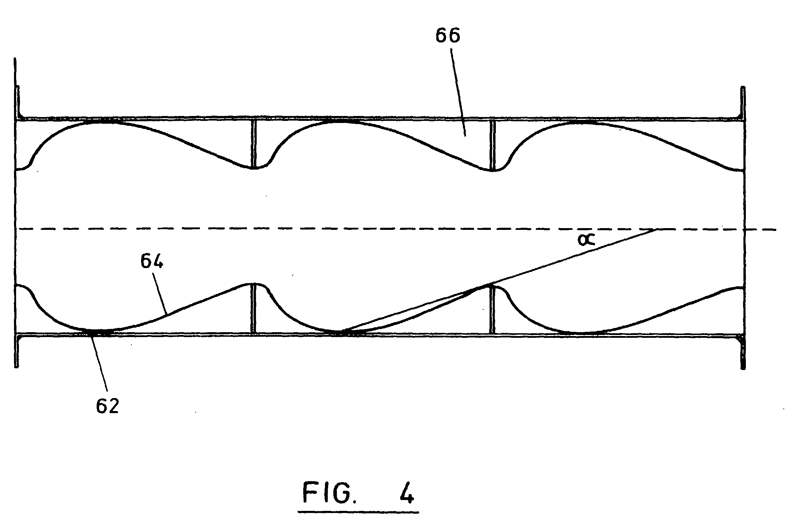

Referring to Figure 4, the drum in this example comprises three interconnecting units 62 each having substantially similar inner conical portions 64, each tapering in the downstream direction. The angle of taper α is about 18°. In this case, the inlet and outlet ends of the units have similar effective internal diameters. Preferably the end of one unit has an effective internal diameter substantially matching that of the adjacent end of the next unit. It will be noted the assembled drum has two internal waists 66 and that its internal surface is smoothly contoured, with no acute edges or undercuts.

Operation of the pelletizer is described with reference to Figure 4.

On entering the pelletizer drum feeder hopper, the material is directed into the first of three units 62 within the pelletizing drum.

As an example, the drum rotating at 60 rpm may cause the pellets to form round beads of approximately 6 mm. As the beads are formed in the first chamber, the process of the further waste material being added to the first chamber causes the product which is half formed to move onto the second chamber by natural progression, due to the angle of the pelleting drum. The product which enters the second chamber is now in a bead form. Continually rolling in this chamber and eventually the third chamber allows the bead to form a generally spherical shape with minimal protrusions or fibrous extensions.

The angle of inclination of the pelletizing drum to the horizontal may help to determine the size of the bead which is to be discharged; a small angle generally results in large beads, whereas a large angle generally results in small beads. The angle of inclination is controlled by the pneumatic rams. Typically, in use, the angle to the horizontal is in the range 0.5 to 6.5°.

Typically, the drum may be manufactured from three one metre units bolted together via external flanges. The units may be held together in position by two cradles each having two sections with two rollers. The units may be designed to be split to allow access for maintenance and removal of the drum. Any suitable mechanism may be used to drive the drum.

As an example, a unit having the configuration as shown in Figure 4 may have an effective inlet internal diameter of 700 mm increasing longitudinally in diameter to a maximum of 1300 mm over a third of the length of the unit and thereafter decreasing in diameter to 700 mm over the remaining two-thirds length of the unit; the length of the unit being of the order of 1.5 metres.

## Claims

1. A method for producing paper pellets, the method comprising the steps of
(a) introducing paper pulp or fibre crumb into a pelletizer in the form of a drum having an upstream end and a downstream end, wherein the internal surface of the drum comprises a plurality of generally conical first portions which taper in the downstream direction, the first portions being spaced by a respective generally conical second portion which tapers in the upstream direction; and
(b) rotating the drum to form the paper pulp or fibre crumb into paper pellets and to convey the paper pulp or fibre crumb, and the paper pellets formed, to the downstream end, from which paper pellets are discharged.

2. A method according to Claim 1, wherein the drum comprises a plurality of interconnecting units joined lengthwise, each unit comprising a said first generally conical portion.

3. A method according to Claim 1, wherein the paper pulp or fibre crumb is introduced into the upstream end of the drum.

4. A method according to Claim 1, wherein the apparatus comprises means for altering the inclination of the longitudinal axis of the drum relative to the horizontal.

5. A method according to Claim 1, wherein, in use, the drum is downwardly inclined in the downstream direction, the angle of inclination of the drum to the horizontal being in the range 0.5 to 20°.

6. A method according to Claim 1, wherein the angle of taper of each first generally conical portion is in the range 5 to 40°.

7. A method of producing paper pellets according to Claim 1, wherein the method is for the production of absorbent paper pellets.

8. A method of producing dried paper pellets, comprising forming the pellets using apparatus according to Claim 1, and drying the pellets so formed by agitating them in a flow of air.

9. A method of producing paper pellets according to Claim 8, wherein the flow of air is at a temperature and for a time appropriate to achieve the desired degree of absorbency of the pellets.

10. A method of producing paper pellets according to Claim 8, wherein the flow of air is at an elevated temperature.

11. A method according to Claim 10, wherein the temperature of the air is in the range 35-150°C.

## Patentansprüche

1. Eine Methode zur Herstellung von Pellets. Die Methode besteht aus folgenden Schritten:
(a) Der Zuführung von Zellstoff oder Faserkrümel in eine Pelletiermaschine in Form einer Trommel mit einem Zulauf- und einem Auslaufende. Die Innenseite der Trommel besteht aus einer Reihe von im allgemeinen kegelförmigen ersten Abschnitten, die in Strömungsrichtung konisch zulaufen, wobei die ersten Abschnitte durch einen entsprechenden zweiten, im allgemeinen kegelförmigen Abschnitt begrenzt werden, der stromaufwärts konisch zuläuft.
(b) Dem Rotieren der Trommel zur Herstellung von Papierpellets aus Zellstoff oder Faserkrümel sowie zum Weitertransport des Zellstoffs bzw. der Faserkrümel sowie der geformten Papierpellets zum Auslaufende, wo die Papierpellets ausgetragen werden.

2. Eine Methode gemäß Anspruch 1, bei der die Trommel mit einer Anzahl von in Längsrichtung miteinander verbundenen Einheiten versehen ist, wobei jede Einheit mit einem bereits erwähnten allgemein kegelig ausgebildeten Abschnitt versehen ist.

3. Eine Methode gemäß Anspruch 1, bei der der Zellstoff oder die Faserkrümel in das Zulaufende der Trommel aufgegeben werden.

4. Eine Methode gemäß Anspruch 1, bei welcher die Einrichtung mit Vorrichtungen zur Änderung der Neigung der Längsachse der Trommel in Bezug auf die Horizontale ausgestattet ist.

5. Eine Methode gemäß Anspruch 1, bei welcher die Trommel während des Betriebs nach unten in Strömungsrichtung auf einen Winkel zur Horizontalen von 0,5 bis 20° abgesenkt wird.

6. Eine Methode gemäß Anspruch 1, bei welcher der Kegelwinkel jedes ersten, im allgemeinen konisch verlaufenden Abschnitts, 5 bis 40° beträgt.

7. Eine Methode der Herstellung von Papierpellets gemäß Anspruch 1, die der Herstellung von saugfähigen Papierpellets dient.

8. Eine Methode der Herstellung getrockneter Papierpellets, welche aus der Bildung der Pellets mittels der Einrichtung gemäß Anspruch 1 und dem Trocknen der hergestellten Pellets durch deren Bewegung in einem Luftstrom besteht.

9. Eine Methode der Herstellung von Papierpellets gemäß Anspruch 8, bei dem die Temperatur und die Dauer des Luftstroms so bemessen sind, dass der gewünschte Grad an Saugfähigkeit der Pellets erreicht wird.

10. Eine Methode der Herstellung von Papierpellets gemäß Anspruch 8, bei welcher der Luftstrom mit erhöhter Temperatur erfolgt.

11. Eine Methode der Herstellung von Papierpellets gemäß Anspruch 10, bei welcher die Lufttemperatur zwischen 35 und 150°C beträgt.

## Revendications

1. Une méthode pour la production des boulettes de papier, la méthode consistant des étapes suivantes :
(a) l'introduction de matière première de papier ou de copeaux de fibre dans un granulateur sous forme d'un tambour ayant une extrémité en amont et une en aval, dans lequel la surface interne du tambour comprend une multiplicité de premières portions généralement coniques qui s'effilent dans la direction en aval, les premières portions étant espacées par une seconde portion respective généralement conique qui s'affile dans une direction en aval; et
(b) la rotation du tambour pour former la matière première de papier ou les copeaux de fibre en boulettes de papier et le transport de la matière première de papier ou les copeaux de fibre et les boulettes de papier formées à l'extrémité en amont d'où les boulettes de papier sont déchargées.

2. Une méthode selon la Revendication 1 dans laquelle le tambour comprend une multiplicité d'éléments en communication qui sont reliés dans le sens de la longueur, chaque élément comprenant une première portion comme dit généralement effilée

3. Une méthode selon la Revendication 1 dans laquelle la matière première de de papier ou de copeaux de fibre est introduite dans l'extrémité en amont du tambour.

4. Une méthode selon la Revendication 1 dans laquelle l'équipement comprend des moyens pour modifier l'inclinaison de l'axe longitudinal du tambour relativement à l'horizontale.

5. Une méthode selon la Revendication 1 dans laquelle, quand le tambour est en service, il est incliné vers le bas dans la direction en amont, l'angle d'inclinaison du tambour par rapport à l'horizontale étant dans la gamme de 0,5 à 20°.

6. Une méthode selon la Revendication 1 dans laquelle l'angle de la conicité de chaque première portion généralement conique est dans la gamme de 5 à 40°

7. Une méthode pour la production de boulettes de papier selon la Revendication 1 dans laquelle la méthode est pour la production de boulettes de papier absorbantes.

8. Une méthode pour la production de boulettes de papier sèches qui comprend la formation de boulettes en utilisant l'équipement selon la Revendication 1 et le séchage des boulettes ainsi formées en les agitant dans un courant d'air.

9. Une méthode pour la production des boulettes de papier selon la Revendication 8 dans laquelle le courant d'air est à une température et pour une période de temps convenable pour obtenir le degré d'absorbance désiré pour les boulettes.

10. Une méthode de production des boulettes de papier selon la Revendication 8 dans laquelle le courant d'air est à une température élevée.

11. Une méthode selon la Revendication 10 dans laquelle la température de l'air est dans la gamme de 35-150°.
